# EUROPEAN PATENT APPLICATION

(11) **EP 1 248 036 A2**
(43) Date of publication of application: **09.10.2002**
(21) Application number: 02007639.4
(22) Date of filing: 04.04.2002
(51) Int. Cl.: F21V 21/02, F16B 21/02, F16B 9/02

(54) **Fast-fit fastening device for a lighting fixture, in particular a suspended lighting fixture**

(30) Priority: 04.04.2001 IT MI010718
(71) Applicant: ARTEMIDE S.p.A., I-20122 Milano (IT)
(72) Inventor: Mandelli, Guido, 20060 Cambiago (IT)
(74) Representative: Cerbaro, Elena, Dr.

(57) **Abstract**

There is provided a fast-fit device (1) for fastening a lighting fixture (2) to a supporting wall (3). A supporting assembly (5) is first fitted directly to the supporting wall (3), in which a through opening (75) has been formed beforehand; and, after making the electric connection by connecting a connector (69) on the lighting fixture (2) to a connector (77) projecting from the opening (75), a retaining assembly (6) carried integrally by the lighting fixture (2) is connected to the supporting assembly (5) by coupling means (7) for securing the retaining assembly (6) axially to the supporting assembly (5) with a predetermined axial slack, and by tightening means (8) for reducing the axial slack between the retaining assembly (6) and the supporting assembly (5) to secure the retaining assembly (6) integrally to the supporting assembly (5).

## Description

The present invention relates to a fast-fit fastening device for a lighting fixture, in particular a suspended lighting fixture.

The difficulty encountered in mounting a lighting fixture to a wall, and especially to a ceiling, is well known: normally, a supporting assembly must first be fitted at an opening in the ceiling; the electric wires must be connected through the opening; and the lighting body must then be fixed, normally screwed, to the supporting assembly. Fixing the supporting assembly and the lighting body are fairly painstaking operations, even for skilled fitters : in particular, to attach the lighting body, this must normally be held still in a precarious position while the fastening members are tightened, with the obvious risk of damage to the lighting body, in the event it is dropped, and also injury to the fitter.

It is therefore an object of the present invention to provide a fast-fit fastening device for a lighting fixture, in particular a suspended lighting fixture, designed to eliminate the aforementioned drawbacks of the known state of the art, and which in particular provides for fastening fixtures quickly, easily and safely; is cheap and easy to produce; and also adapts, with no major alterations, to different types of lighting fixtures.

According to the present invention, there is provided a fast-fit fastening device for a lighting fixture, in particular a suspended lighting fixture, the device comprising a supporting assembly fittable integrally to a supporting wall, and a retaining assembly carried by the lighting fixture and connectable to the supporting assembly; the device being characterized by comprising coupling means for axially connecting said retaining assembly to said supporting assembly with a predetermined axial slack; and tightening means for reducing said axial slack between the retaining assembly and the supporting assembly, and connecting said retaining assembly integrally to said supporting assembly.

The device according to the invention is thus cheap and easy to produce; is adaptable, with no major alterations, to different types of lighting fixtures; and provides for fastening fixtures quickly, easily and safely.

A non-limiting embodiment of the present invention will be described by way of example with reference to the accompanying drawings, in which:
Figure 1 shows an overall view of a fast-fit fastening device for a lighting fixture in accordance with the invention at the assembly stage;
Figure 2 shows a side view, partly sectioned longitudinally, of the Figure 1 device with parts removed for clarity;
Figure 3 shows an exploded view of a component part of the Figure 1 device;
Figure 4 shows a partial view in perspective of a further component part of the Figure 1 device.

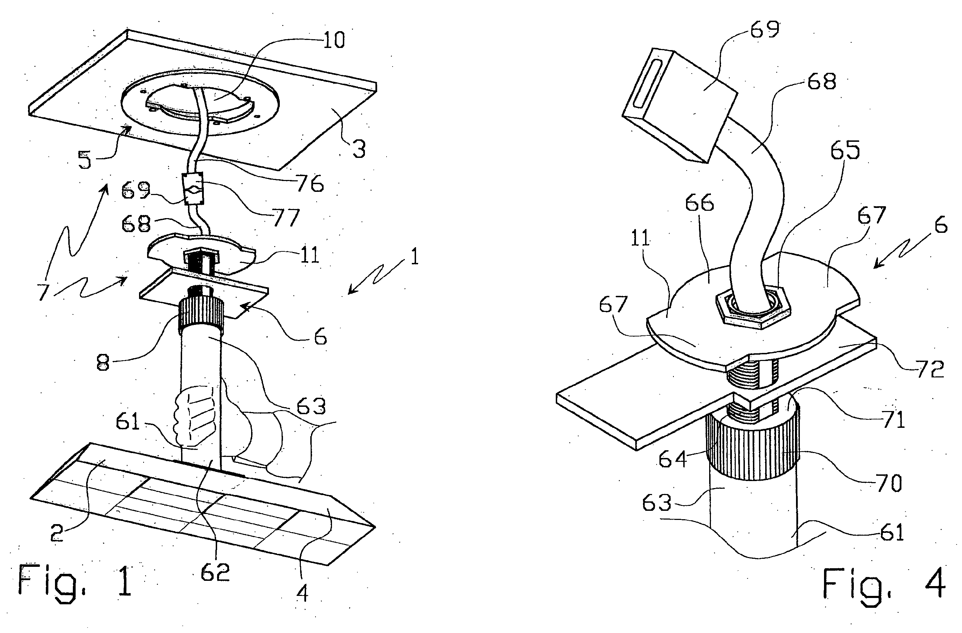

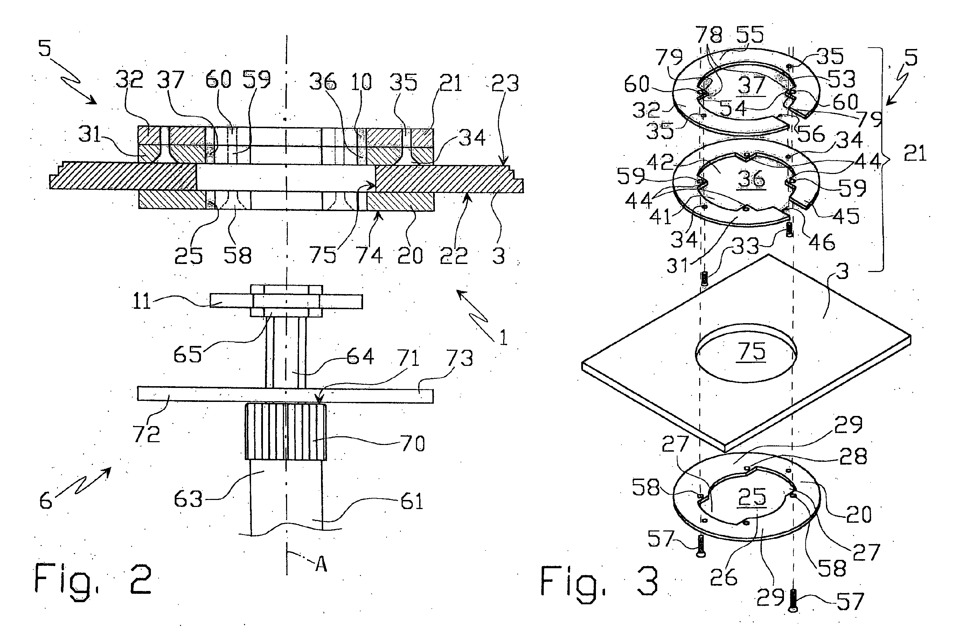

With reference to Figures 1 and 2, number 1 indicates as a whole a fast-fit device for fastening a lighting fixture 2 to a supporting wall 3. In the non-limiting example shown, lighting fixture 2 is a suspended, i.e. ceiling, type, and comprises a body 4 of any form and housing at least one light source (not shown). Supporting wall 3 may be a portion of a ceiling or false ceiling, or a decorative element such as a ceiling-rose, box, etc. in turn fixed integrally to the ceiling in any known manner.

Device 1 comprises a supporting assembly 5 fittable integrally to supporting wall 3; and a retaining assembly 6 carried by lighting fixture 2 and connectable to supporting assembly 5 by coupling means 7 for connecting retaining assembly 6 axially to supporting assembly 5 with a predetermined axial slack, and by tightening means 8 for reducing the axial slack between retaining assembly 6 and supporting assembly 5, and connecting retaining assembly 6 integrally to supporting assembly 5 as explained later on.

Coupling means 7 provide for connecting retaining assembly 6 to supporting assembly 5 in rotary and axially slack manner by moving retaining assembly 6 axially along an axis A and then rotating it, and comprise a seat 10, formed in supporting assembly 5 and through which retaining assembly 6 is inserted axially, and a connecting head 11 carried by retaining assembly 6.

With reference also to Figure 3, supporting assembly 5 comprises a front member 20 and a rear member 21, which fit on to respective opposite faces 22, 23 of supporting wall 3; and fastening means for fastening members 20, 21 to each other, with supporting wall 3 in between. In the non-limiting example shown in Figures 2 and 3, member 20 is defined by a substantially circular metal plate having an axially through opening 25 of substantially the same shape as connecting head 11, which in fact is insertable loosely through opening 25. Opening 25 comprises a substantially circular central portion 26, from which diametrically opposite lateral portions 27 extend; and a peripheral edge 28 of member 20 comprises two diametrically opposite connecting portions 29 perpendicular to lateral portions 27 of opening 25. Member 21 is defined by two superimposed substantially circular metal plates 31, 32, which are connected integrally to each other, e.g. by means of screws 33 recessed in respective pairs of holes 34, 35 formed in plates 31, 32, and have respective axially through openings 36, 37 aligned with each other. Opening 36 in plate 31 is substantially cross-shaped, and comprises two perpendicular arms 41, 42, both substantially the same shape as opening 25 in member 20 and defined by four radially inner portions 44 arranged symmetrically 90° apart. A peripheral edge 45 of plate 31 has a radial slit 46 communicating with opening 36, and in particular with arm 42. Opening 37 in plate 32 is a substantially circular opening defined by a radially inner edge 53; two diametrically opposite radial portions 54 extend radially inwards from edge 53; and a peripheral edge 55 of plate 32 has a radial slit 56 communicating with opening 37. Plates 31, 32 are connected face to face to each other to define member 21, so that openings 36, 37 and respective slits 46, 56 are superimposed and aligned, and radial portions 54 on plate 32 are superimposed on a pair of diametrically opposite radial portions 44 on plate 31. The fastening means for fastening members 20, 21 together comprise two screws 57 recessed inside respective holes 58 formed through member 20, and inside respective pairs of holes 59, 60 formed through radial portions 44, 54 of plates 31, 32. Once supporting assembly 5 is assembled, openings 36, 37 define seat 10, and opening 25 forms an access opening to seat 10.

With specific reference to Figures 1, 2 and 4, retaining assembly 6 comprises a connecting member 61in the example shown, defined by a hollow tubular member projecting from body 4 of lighting fixture 2. Connecting member 61 has one end 62 fixed integrally in any known manner to body 4; and one end 63 opposite end 62 and from which projects axially a hollow, externally threaded rod 64. Connecting head 11 projects crosswise from a free end 65 of rod 64, and comprises a central portion 66 connected integrally to the free end 65 of rod 64, and two catches 67 symmetrical and diametrically opposite with respect to central portion 66. A cable 68 is housed through connecting member 68 and rod 64, is connected to the light source of lighting fixture 2, and is fitted with a connector 69.

Tightening means 8 comprise an internally threaded ring nut 70, which is fitted in rotary and axially sliding manner to connecting member 61, is connected to rod 64 to form a screw-nut screw coupling, and has an annular end edge 71 facing the free end 65 of rod 64 to rest axially on a flange 72 fitted to slide freely on rod 64 and defined, in the example shown, by a metal plate of any shape. Flange 72 defines a mating portion 73 of retaining assembly 6, which in use cooperates with a mating surface 74 of member 20 (mating surface 74 being defined, in the example shown, by the face of member 20 opposite the face mating with supporting wall 3). In a variation, flange 72 is dispensed with, in which case, mating portion 73 is defined by annular end edge 71 of ring nut 70.

In actual use, supporting assembly 5 is first fitted directly on to supporting wall 3, in which a substantially circular through opening 75 (Figure 3), of such a diameter as to permit through insertion of connecting head 11, has been formed beforehand. A cable 76 (Figure 1) hangs through opening 75, and is fitted with a connector 77 to connect lighting fixture 2 to the electric system. Member 20 and the preassembled member 21 are placed respectively on opposite faces 22, 23 of supporting wall 3, at opening 75 (Figure 2). Member 21 can be inserted easily through opening 75 by virtue of slits 46, 56 (which are wider than the thickness of wall 3). Members 20, 21 are then aligned with each other, so that opening 25 is aligned with arm 41, and holes 58 are aligned with holes 59, 60; and members 20, 21 are then fastened to each other, with supporting wall 3 in between, by means of screws 57 inserted through holes 58, 59, 60, so that supporting wall 3 is gripped between members 20 and 21.

Once connected to each other, connectors 69, 77 and respective cables 68, 76 are inserted through opening 75 and concealed by supporting wall 3.

Retaining assembly 6 (supporting lighting fixture 2) is then connected to supporting assembly 5 as follows: gripping connecting member 61, the fitter inserts retaining assembly 6, axially along axis A in Figure 2, inside seat 10, with connecting head 11 aligned with opening 25 and, therefore, with arm 41 of opening 36; and connecting head 11 is inserted axially inside seat 10 until mating portion 73 (i.e. flange 72 resting on end edge 71 of ring nut 70) comes to rest against mating surface 74 of member 20. The distance, along axis A, between flange 72 and connecting head 11 ensures ample axial slack between retaining assembly 6 and supporting assembly 5; and, when mating portion 73 comes to rest against member 20, connecting head 11 is located inside seat 10, substantially on a level with plate 32, so as to interfere radially with radial portions 54 of plate 32, but not with radial portions 44 of plate 31. More specifically, catches 67 on connecting head 11 rest circumferentially against respective first sides 78 of radial portions 54. Retaining assembly 6 is then rotated 90° (anticlockwise, in the example shown) so that connecting head 11, which slides over radial portions 44, is aligned with arm 42 of opening 36, and catches 67 come to rest against respective second sides 79 of radial portions 54, which therefore act as stop means for arresting and determining a given rotation (90° in the example shown) of retaining assembly 6 with respect to supporting assembly 5. Catches 67 of connecting head 11 are therefore located over connecting portions 29, so that, if lighting fixture 2 is released (intentionally or accidentally) by the fitter, catches 67 cooperate axially with connecting portions 29, thus ensuring axial connection of retaining assembly 6 and supporting assembly 5, and safe axial connection of lighting fixture 2 to supporting assembly 5.

At this point, the axial slack between retaining assembly 6 and supporting assembly 5 is reduced by tightening means 8 to secure retaining assembly 6 integrally to supporting assembly 5. That is, ring nut 70 is turned so that mating portion 73 comes to rest axially against mating surface 74, and connecting portions 29 of member 20 are gripped between catches 67 of connecting head 11 and mating portion 73 to secure retaining assembly 6 integrally to supporting assembly 5.

Clearly, changes may be made to the device as described and illustrated herein without, however, departing from the scope of the present invention. In particular, connecting member 61 and body 4 of lighting fixture 2 may be of any form; connecting head 11 and seat 10 may be shaped otherwise than as described herein by way of example; and tightening means 8, as opposed to a screw-nut screw coupling, may comprise any other known type of coupling system suitable for reducing axial slack (e.g. a spring).

## Claims

1. A fast-fit fastening device (1) for a lighting fixture (2), in particular a suspended lighting fixture, the device comprising a supporting assembly (5) fittable integrally to a supporting wall (3), and a retaining assembly (6) carried by the lighting fixture and connectable to the supporting assembly; the device being **characterized by** comprising coupling means (7) for axially connecting said retaining assembly (6) to said supporting assembly (5) with a predetermined axial slack; and tightening means (8) for reducing said axial slack between the retaining assembly (6) and the supporting assembly (5), and connecting said retaining assembly integrally to said supporting assembly.

2. A device as claimed in Claim 1, **characterized in that** said coupling means (7) are means for connecting said retaining assembly (6) and said supporting assembly (5) in rotary and axially slack manner by axial displacement and subsequent rotation of the retaining assembly (6).

3. A device as claimed in Claim 2, **characterized by** also comprising stop means (79) for arresting rotation of said retaining assembly (6) with respect to said supporting assembly (5), and for limiting said rotation to a predetermined amount.

4. A device as claimed in Claim 2 or 3, **characterized in that** said coupling means (7) comprise a seat (10) formed in said supporting assembly (5), and through which said retaining assembly (6) is inserted axially; said retaining assembly (6) and said seat (10) comprising respective connecting parts (11, 29) which mate positively, by rotation of said retaining assembly (6) with respect to said seat (10), to secure said retaining assembly axially inside said seat.

5. A device as claimed in Claim 4, **characterized in that** said retaining assembly (6) comprises a rod (64), and a connecting head (11) projecting crosswise from a free end (65) of said rod; said seat (10) comprising an access opening (25), through which said connecting head (11) is insertable, and at least one connecting portion (29) which cooperates axially with said connecting head (11) when said connecting head is rotated inside said seat.

6. A device as claimed in one of the foregoing Claims, **characterized in that** said supporting assembly (5) comprises a front member (20) and a rear member (21), which are fittable to respective opposite faces (22, 23) of said supporting wall (3), and have respective openings (25; 36, 37) aligned with one another and superimposed over a corresponding opening (75) in said supporting wall (3); and fastening means (57; 58, 59, 60) for fastening said members (20, 21) to each other with said supporting wall (3) in between.

7. A device as claimed in one of the foregoing Claims, **characterized in that** said tightening means (8) comprise a screw-nut screw coupling, by which a mating portion (73) of said retaining assembly (6) is brought to rest axially against a mating surface (74) of said supporting assembly (5).

8. A device as claimed in Claim 7, **characterized in that** said tightening means (8) comprise an internally threaded ring nut (70) fitted in sliding manner to a threaded rod (64); said ring nut having a flange (72) defining said mating portion (73).
